# EUROPÄISCHE PATENTSCHRIFT

(11) **EP 0 983 467 B1**
(45) Veröffentlichungstag und Bekanntmachung des Hinweises auf die Patenterteilung: **16.10.2002**
(21) Anmeldenummer: 98925622.7
(22) Anmeldetag: 20.05.1998
(51) Int. Cl.: F16M 11/04

(54) **GELENKARM FÜR BÜROGERÄTE**
ARTICULATED BRACKET FOR OFFICE EQUIPMENT
BRAS ARTICULE POUR ACCESSOIRE DE BUREAU

(30) Priorität: 23.05.1997 DE 29709093 U
(43) Veröffentlichungstag der Anmeldung: 08.03.2000
(73) Patentinhaber: Novus Sträter GmbH, 58540 Meinerzhagen (DE)
(72) Erfinder: Sträter, Fritz, 58540 Valbert (DE); Sträter, Uwe, 58540 Meinerzhagen (DE)
(74) Vertreter: Zapf, Christoph, Dipl.-Ing.
(86) Internationale Anmeldenummer: EP9802962
(87) Internationale Veröffentlichungsnummer: WO98053243

(56) Entgegenhaltungen:
- CH-A- 675 014
- DE-A- 2 402 126
- DE-U- 29 709 093
- US-A- 3 820 752
- US-A- 4 545 555
- US-A- 5 538 214

## Beschreibung

Die vorliegende Erfindung betrifft einen Gelenkarm zur positionsvariablen Halterung insbesondere von Bürogeräten, wie Bildschirmen, Telefonen und dergleichen, bestehend aus einem ortsfest zu befestigenden Sockelteil, einem mit dem Sockelteil über ein erstes Gelenk schwenkbar verbundenen unteren Armteil sowie einem mit dem unteren Armteil über ein zweites Gelenk schwenkbar verbundenen oberen Armteil, wobei das obere Armteil mit dem Sockelteil über ein Zugelement verbunden ist und Federmittel in Form von zwei Federelementen derart vorgesehen sind, daß eine die Armteile abstützende Tragkraft erzeugt wird.

Ein derartiger Gelenkarm ist aus der Druckschrift DE 2 402 126 A bekannt, dessen oberer Armteil ein Lampengehäuse trägt. Ein als Zugelement vorgesehenes flexibles Band ist mittelbar mit einem Sockelteil verbunden, und zwar über ein kastenartiges, auf einem unteren Armteil verschiebbar angeordnetes Führungsteil, welches seinerseits mit dem Sockelteil über einen starren Bügel verbunden ist. Das Zugelement wird exzentrisch über ein Gelenk zwischen dem unteren und dem oberen Armteil zum oberen Armteil geführt und ist über jeweils im Bereich des unteren und oberen Armteils angeordnete Federelemente in Reihenschaltung mit den entsprechenden Armteilen verbunden. Das Lampengehäuse ist ein relativ leichtgewichtiges Teil.

Der vorliegenden Erfindung liegt daher die Aufgabe zugrunde, einen Gelenkarm der gattungsgemäßen Art zu schaffen, bei dem der Gewichtsausgleich derart verbessert ist, daß auch bei Belastung mit großen Traglasten die Armteile selbsttätig statisch in beliebigen Stellungen gehalten werden. Hierdurch soll der Gelenkarm vor allem auch zur Halterung von schweren Geräten, wie Computer-Bildschirmen und dergleichen, geeignet sein.

Erfindungsgemäß wird dies dadurch erreicht, daß das Zugelement exzentrisch zur jeweiligen Gelenkachse über die beiden Gelenke geführt und an dem Sockelteil befestigt ist, wobei das erste Federelement im Bereich des unteren Armteils zwischen diesem und dem durchgehend zwischen dem Sockelteil und dem zweiten Gelenk verlaufenden Zugelement - und damit in Parallelschaltung zu dem Zugelement ― und das zweite Federelement im Bereich des oberen Armteils zwischen diesem und dem Zugelement - in Reihenschaltung mit dem Zugelement - angeordnet sind.

Durch diese erfindungsgemäße Ausgestaltung wird zunächst erreicht, daß eine relativ hohe Tragkraft F als Summe der Einzelkräfte F₁ + F₂ der beiden Federelemente gewährleistet werden kann, wobei die Federelemente aufgrund der Aufteilung vorteilhafterweise mit kleiner und kompakter Raumform ausgeführt sein können. Dies ist insbesondere von Vorteil, wenn die Armteile als rohrartige, längliche Hohlkörper ausgeführt sind und die Federelemente zusammen mit dem Zugelement innerhalb der Armteile untergebracht werden sollen. Denn im Gegensatz zur erfindungsgemäßen Feder-Aufteilung wäre ein einzelnes, für eine hohe Tragkraft ausgelegtes Federelement räumlich so groß, daß eine interne Unterbringung ausgeschlossen wäre.

Die Erfindung führt ferner zu der vorteilhaften Wirkung, daß die beiden Federelemente über das zweite Gelenk hinweg über das Zugelement derart kraftschlüssig verbunden sind, daß sie - je nach Bewegung des oberen und/oder unteren Armteils - einzeln oder gemeinsam wirken. Hierbei kommt es jeweils auf die Bewegung der Armteile relativ zu dem ortsfesten Sockelteil an, d.h. auf die jeweilige Ausrichtung im Raum (relative Ausrichtung gegenüber der Horizontalen und Vertikalen). Diesbezüglich ist jedem Armteil eines der beiden Federelemente speziell zugeordnet. Werden beispielsweise beide Armteile gemeinsam im Raum verschwenkt, so wirken beide Federelemente so, daß sich ihre Vorspannkraft ändert. Bei Verschwenkung von nur einem der beiden Armteile ändert sich nur die Vorspannkraft des zugehörigen Federelementes. Beispielsweise kann nur das untere Armteil verschwenkt werden, wodurch das obere Armteil lediglich im Raum parallel versetzt wird. Hierbei tritt ausschließlich eine Änderung der Vorspannkraft des ersten, dem unteren Armteil zugeordneten Federelementes auf. Entsprechendes gilt bei Verschwenkung nur des oberen Armteils. Durch die Erfindung lassen sich die Federelemente sehr genau auf die jeweiligen Gewichts- und Hebelverhältnisse der beiden Armteile abstimmen.

In einer vorteilhaften Ausgestaltung der Erfindung kann zudem mit speziellen, im folgenden noch genauer erläuterten Kompensationsmitteln eine selbsttätige, sehr genaue Kompensation der jeweils wirksamen, horizontal gemessenen und sich bei den Schwenkbewegungen ändernden Hebelarmlängen derart erreicht werden, daß - bezogen auf jedes Armteil - die von dem jeweiligen Federelement erzeugte Tragkraft stets so in Abhängigkeit von der jeweiligen wirksamen Hebelarmlänge verändert wird, daß der Gelenkarm in jeder beliebigen Stellung statisch stehenbleibt. Ferner läßt sich sogar erreichen, daß selbst bei einer Verschwenkung des oberen Armteils aus einer ansteigenden Raumlage über die horizontale Lage hinaus in eine abfallende Lage die dabei auftretende Wiederverkürzung des wirksamen Hebelarms dahingehend berücksichtigt wird, daß anstatt eines weiteren Anstiegs der Tragkraft die Kraft weniger stark (degressiv) erhöht oder sogar entsprechend dem sich verkürzenden wirksamen Hebelarm wieder reduziert wird.

Konkret kann dies mit Vorteil dadurch erreicht werden, daß das Zugelement zweiteilig aus einem unteren Zugteil und einem oberen Zugteil gebildet ist, wobei die beiden Zugteile im Bereich des zweiten Gelenks über ein frei um die Gelenkachse verdrehbares, vorzugsweise scheibenförmiges Umlenkelement verbunden sind. Dabei ist zumindest das obere Zugteil von einem flexiblen Zugseil gebildet, welches einseitig am Umlenkelement exzentrisch zur Gelenkachse des zweiten Gelenks sowie anderseitig mittelbar über das zweite Federgelenk am oberen Armteil befestigt ist. Zur Variation der Vorspannkraft des zweiten (oberen) Federelementes ist das Zugseil im Bereich des zweiten Gelenks über eine Umlenkkurve des Umlenkelementes geführt. Diese Umlenkkurve wird bei den Schwenkbewegungen mehr oder weniger weit von dem Zugseil umschlungen, wodurch die Vorspannkraft des Federelementes variiert wird. Erfindungsgemäß kann dabei durch einen speziellen Verlauf des Krümmungsradius, der über den Seilumlenkweg hinweg konstant oder sich ändernd ausgebildet sein kann, die Änderung der wirksamen Hebelarmlänge kompensiert werden. Bei dem Verlauf der Umlenkkurve kann es sich speziell um einen Kreis- oder Spiralabschnitt handeln.

Vorzugsweise ist auch das untere Zugteil als Zugseil ausgeführt und über eine weitere Umlenkkurve des frei drehbaren Umlenkelementes geführt. Hierbei ist von Vorteil, daß die beiden Umlenkkurven gleichartig, insbesondere aber ungleich ausgeführt sein können. So sind durch unterschiedliche, über den Umschlingungsweg hinweg konstante oder sich ändernde Krümmungsradien praktisch beliebige kinematische Über- bzw. Untersetzungsverhältnisse realisierbar, und zwar konstante, aber auch variable Verhältnisse (progressiv/ degressiv)

Weitere vorteilhafte Ausgestaltungsmerkmale der Erfindung ergeben sich aus den Unteransprüchen sowie der folgenden Beschreibung.

Anhand von in der Zeichnung veranschaulichten, bevorzugten Ausführungsbeispielen soll im folgenden die Erfindung näher erläutert werden. Dabei zeigen:
- Fig. 1: eine längsgeschnittene Seitenansicht eines erfindungsgemäßen Gelenkarms in einer ersten Ausführungsform, wobei zwei verschiedene Stellungen der Armteile dargestellt sind,
- Fig. 2: eine perspektivische Explosionsdarstellung des die beiden Armteile verbindenden zweiten Gelenks in einer ersten, der Fig. 1 entsprechenden Ausführungsform,
- Fig. 3: eine Darstellung analog zu Fig. 2, jedoch in einer zweiten Ausführungsform,
- Fig. 4: eine Einzelheit des zweiten Gelenks in einer Ausführungsvariante und
- Fig. 5: eine längsgeschnittene Seitenansicht einer weiteren Ausführungsform des erfindungsgemäßen Gelenkarms, wiederum in zwei verschiedenen Schwenkstellungen der Armteile.

In den verschiedenen Figuren der Zeichnung sind gleiche Teile stets mit den gleichen Bezugszeichen versehen und werden daher in der Regel jeweils nur einmal beschrieben.

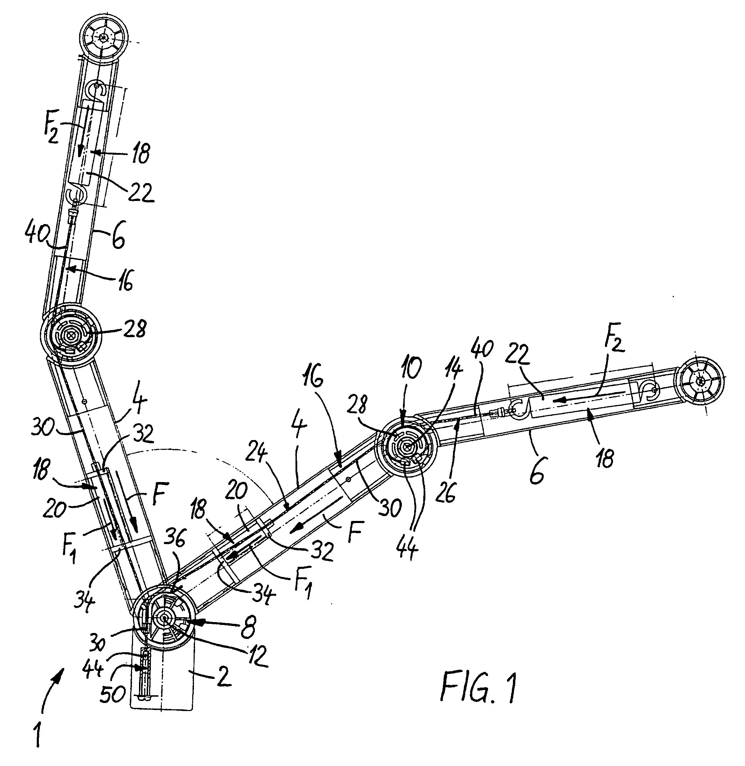

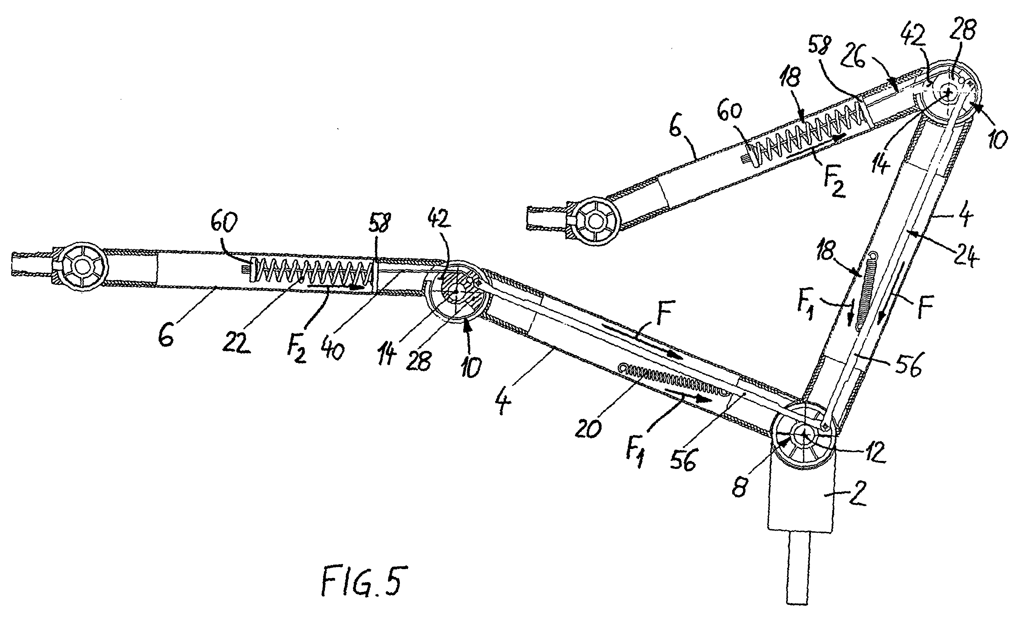

Wie sich zunächst aus Fig. 1 und 5 ergibt, besteht ein erfindungsgemäßer Gelenkarm 1 aus einem ortsfest beispielsweise an einem Schreibtisch zu befestigenden Sockelteil 2, einem unteren Armteil 4 und einem oberen Armteil 6. Das untere Armteil 4 ist mit dem Sockelteil 2 über ein erstes Gelenk 8 schwenkbar verbunden. Die beiden Armteile 4, 6 sind miteinander über ein zweites Gelenk 10 schwenkbar verbunden. Das erste Gelenk 8 definiert eine erste Gelenkachse 12, und das zweite Gelenk 10 besitzt eine zweite Gelenkachse 14. Diese beiden Gelenkachsen 12, 14 verlaufen zueinander parallel und bei bestimmungsgemäßer Befestigung des Sockelteils 2 etwa horizontal im Raum.

Das obere Armteil 6 ist mit dem ortsfesten Sockelteil 2 über ein über die Gelenke 10, 8 geführtes Zugelement 16 verbunden, wobei Federmittel 18 derart vorgesehen sind, daß eine die Armteile 4, 6 abstützende Tragkraft F erzeugt wird.

Erfindungsgemäß umfassen die Federmittel 18 zwei einzelne Federelemente 20 und 22. Ein erstes Federelement 20 ist im Bereich des unteren Armteils 4 zwischen diesem und dem Zugelement 16 derart angeordnet, daß es das erste Armteil 4 mit einer in Richtung des Sockelteils 2 weisenden Federkraft F₁ beaufschlagt und so abstützt. Ein zweites Federelement 22 befindet sich im Bereich des oberen Armteils 6 zwischen diesem und dem Zugelement 16, wobei das zweite Federelement 22 ebenfalls eine in Richtung des Sockelteils 2 gerichtete Abstützkraft F₂ erzeugt. Somit ergibt sich die insgesamt wirkende Abstützkraft F aus der Summe der Teilkräfte F₁ + F₂.

In Fig. 1 und 5 sind beispielhaft jeweils zwei verschiedene Stellungen der Armteile 4, 6 veranschaulicht. Hieraus wird deutlich, daß eine Verschwenkung beider Armteile 4 und 6 zu einer Veränderung beider Federkräfte F₁ und F₂ führt. Gemäß Fig. 1 ist zwar der Winkel zwischen den beiden Armteilen 4, 6 etwa konstant geblieben, dennoch wurde auch das obere Armteil 6 relativ zum Sockelteil 2 bezüglich seiner Raumorientierung verschwenkt. Hierdurch werden beide Federelemente 20, 22 bezüglich ihrer Vorspannung verändert. Wird demgegenüber jeweils nur eines der beiden Armteile 4 oder 6 bezüglich seiner Raumorientierung relativ zum Sockelteil 2 verschwenkt, so wird nur das ihm konkret zugeordnete Federelement 20 oder 22 bezüglich seiner Vorspannung variiert.

In den bevorzugten Ausführungsformen der Erfindung ist das Zugelement 16 zweiteilig aus einem unteren Zugteil 24 und einem oberen Zugteil 26 gebildet. Diese beiden Zugteile 24, 26 sind im Bereich des zweiten Gelenks 10 über ein frei um die Gelenkachse 14 verdrehbares, vorzugsweise scheibenförmiges Umlenkelement 28 miteinander verbunden.

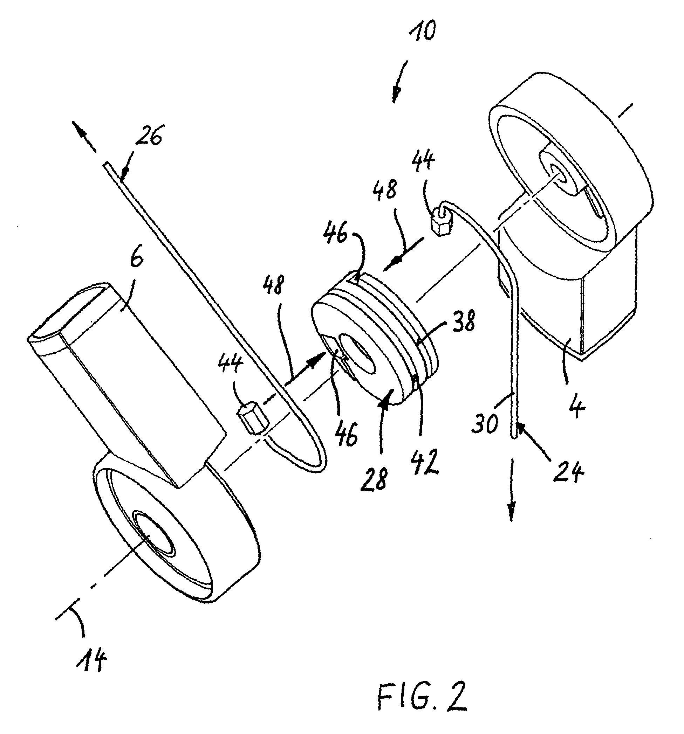

In den Ausführungsformen nach Fig. 1 bis 4 ist das untere Zugteil 24 von einem flexiblen Zugseil 30 gebildet, das einseitig am Sockelteil 2 exzentrisch zur Gelenkachse 12 des ersten Gelenks 8 sowie anderseitig am Umlenkelement 28 exzentrisch zur Gelenkachse 14 des zweiten Gelenks 10 befestigt ist. Das erste Federelement ist hierbei beispielhaft als Druckfeder ausgebildet und unter Vorspannung zwischen einem ersten, an dem Zugseil 30 befestigten Widerlagerelement 32 und einem zweiten, Bestandteil des unteren Armteils 4 bildenden Widerlagerelement 34 angeordnet. Das untere Zugteil 24 bzw. das Zugseil 30 verläuft hierbei durchgehend, d.h. nicht unterbrochen, zwischen dem Sockelteil 2 und dem Umlenkelement 28. Über das durchgehende untere Zugteil 24 wird das Umlenkelement 28 stets in der gleichen Drehstellung relativ zu dem Sockelteil 2 gehalten (Parallelführung). Im Bereich des ersten Gelenks 8 ist das Zugseil 30 derart über eine Umlenkkurve 36 geführt, daß bei den Schwenkbewegungen des unteren Armteils 4 die Umlenkkurve 36 mehr oder weniger weit von dem Zugseil 30 umschlungen wird. Hierdurch wird eine Variation der Federkraft bewirkt. Das Zugseil 30 ist ferner auch im Bereich des zweiten Gelenks 10 über eine Umlenkkurve 38 des Umlenkelementes 28 geführt. Hierzu wird insbesondere auf die Darstellungen in Fig. 2 bis 4 verwiesen.

Zweckmäßigerweise ist auch das obere Zugteil 26 von einem flexiblen Zugseil 40 gebildet, welches einseitig am Umlenkelement 28 exzentrisch zur Gelenkachse 14 des zweiten Gelenks 10 sowie anderseitig mittelbar über das zweite Federelement 22 am oberen Armteil 6 befestigt ist. Auch dieses Zugseil 40 ist im Bereich des zweiten Gelenks 10 über eine (zweite) Umlenkkurve 42 des Umlenkelementes 28 geführt (s. wiederum insbesondere Fig. 2 bis 4).

Bei den Ausführungsformen nach Fig. 1 bis 4 weist das Umlenkelement 28 somit zwei Umlenkkurven 38 und 42 auf, die in Richtung der Gelenkachse 14 versetzt nebeneinander angeordnet sind. Bei der Ausführung nach Fig. 1 und 2 sind die beiden Umlenkkurven 38 und 42 gleichartig als Kreisbogenabschnitte mit gleichem Krümmungsradius ausgebildet. In dieser Ausführungsform wird über das Umlenkelement 28 folglich eine bloße Umlenkung, d.h. eine 1:1-Übersetzung, erreicht.

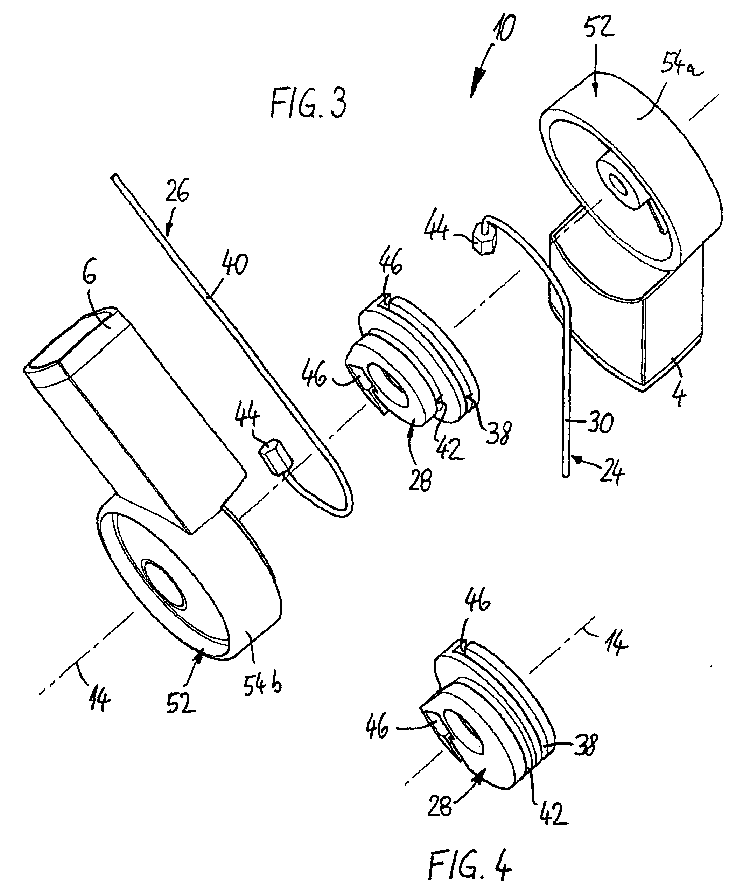

Bei der in Fig. 3 veranschaulichten Ausführungsform ist jede Umlenkkurve 38, 42 ebenfalls als Kreisbogenabschnitt ausgeführt, allerdings weisen die beiden Umlenkkurven 38 und 42 unterschiedliche Radien auf. Insbesondere ist die dem oberen Zugteil 26 zugeordnete Umlenkkurve 42 mit kleinerem Krümmungsradius als die dem unteren Zugteil 24 zugeordnete Umlenkkurve 38 ausgebildet. Hierdurch wird eine kinematische Bewegungsüber- bzw. untersetzung erreicht. Das Übersetzungsverhältnis ist hierbei über den Schwenkbereich konstant.

Schließlich ist in Fig. 4 eine weitere Ausführungsvariante dargestellt, wonach insbesondere bei der dem oberen Zugteil 26 zugeordneten Umlenkkurve 42 vorgesehen ist, daß sie einen über den Seilumlenkweg hinweg sich ändernden Krümmungsradius aufweist. Insbesondere handelt es sich um die Form eines Spiralabschnittes. Hierdurch wird ein sich über den Schwenkweg hinweg änderndes Übersetzungsverhältnis erreicht.

Hierdurch werden somit Kompensationsmittel gebildet, die es ermöglichen, sehr genau die bei den Schwenkbewegungen auftretenden Veränderungen der wirksamen Hebelarmlängen zu kompensieren.

In diesem Zusammenhang kann es zudem von Vorteil sein, auch die Umlenkkurve 36 des Sockelteils 2 mit einem über den Seilumlenkweg hinweg konstanten oder sich ändernden Krümmungsradius auszubilden.

Gemäß Fig. 1 ist das zweite (obere) Federelement 22 als Zugfeder ausgeführt und unter Vorspannung zwischen dem Ende des Zugseils 40 und einem Befestigungspunkt des oberen Armteils 6 angeordnet.

Wie am besten in den Fig. 2 und 3 erkennbar ist, weist jedes Zugseil 30, 40 endseitig jeweils ein Verbinderstück 44 auf, welches formschlüssig in einer Aufnahmevertiefung 46 des Umlenkelementes 28 sitzt. Entsprechendes gilt auch für die Verbindung des unteren Zugseils 30 mit dem Sockelteil 2; vgl. Fig. 1. Diese Ausführung gewährleistet eine sehr einfache Montage, indem lediglich die Verbinderstücke 44 in die Aufnahmevertiefungen 46 eingehängt zu werden brauchen. Dies ist in Fig. 2 beispielhaft durch eingezeichnete Pfeile 48 veranschaulicht.

In Fig. 1 ist noch eine weitere vorteilhafte Ausgestaltung veranschaulicht, wonach das Zugelement 16 bzw. das untere Zugteil 24 mit dem Sockelteil 2 mittelbar über eine Tragkraft-Justiereinrichtung 50 verbunden ist. Wie dargestellt, kann es sich um eine Einstellschraube handeln, mit der über das Zugelement 16 die Tragkraft F bzw. die beiden Teilkräfte F₁ und F₂ variiert werden können.

Die beiden Armteile 4, 6 sind bevorzugt als rohrartige, längliche Hohlkörper insbesondere mit etwa rechteckiger Querschnittskontur ausgebildet. Dabei sind das Zugelement 16 bzw. dessen Bestandteile und die Federmittel 18 bzw. die Federelemente 20, 22 gekapselt innerhalb der Armteile 4, 6 angeordnet. Gemäß Fig. 2 und 3 bilden die Armteile 4, 6 in ihrem Verbindungsbereich ein Gelenkgehäuse 52, wobei jedes Armteil 4, 6 eine Gehäuse-Halbschale 54a bzw. 54b aufweist. Bei dieser Ausführungsform ist der seitliche Versatz der beiden Umlenkkurven 38, 42 des Umlenkelementes 28 und damit auch der Versatz der Zugseile 30, 40 vorteilhaft, weil es hierdurch möglich ist, die Seile versetzt und somit montagefreundlich von dem unteren Armteil 4 in das obere Armteil 6 hindurchzuführen.

Was nun die Ausführungsform nach Fig. 5 betrifft, so entspricht diese sehr weitgehend der Ausführung nach Fig. 1. Im folgenden sollen daher nur die Unterschiede kurz erläutert werden. Bei dieser Ausführung ist das untere Zugteil 24 von einer starren Zugstange 56 gebildet, die einseitig gelenkig und exzentrisch zur Gelenkachse 12 des ersten Gelenks 8 am Sockelteil 2 sowie anderseitig gelenkig und exzentrisch zur Gelenkachse 14 des zweiten Gelenks 10 am Umlenkelement 28 befestigt ist. Hierbei ist das erste Federelement 20 als Zugfeder ausgebildet und greift einendig an der Zugstange 56 und anderendig an einem Fixpunkt des unteren Armteils 4 an. Somit bildet das untere Zugteil 24 auch hier eine ununterbrochene Verbindung zwischen dem Sockelteil 2 und dem Umlenkelement 28 (Parallelführung). Das zweite Federelement 22 ist hier beispielhaft als Druckfeder ausgebildet; es sitzt zwischen einem Widerlagerelement 58 des oberen Armteils 6 und einem am Ende des Zugseils 40 befestigten Widerlagerelement 60. Auch hierbei weist das Umlenkelement 28 für das obere Zugseil 40 die Umlenkkurve 42 auf, die hier speziell ausgehend vom Befestigungspunkt des Zugseils 40 über den Umschlingungsweg hinweg einen abnehmenden Krümmungsradius, d.h. insbesondere eine Spiralform aufweist. Hierdurch wird ein optimaler Ausgleich zwischen den jeweiligen Feder- und Hebelkräften erreicht. Wird beispielsweise das obere Armteil 6 aus seiner horizontalen Position weitergehend nach unten geschwenkt, würde eigentlich die Federkraft F₂ des zweiten Federelementes 22 weiter erhöht. Durch die erfindungsgemäße Ausgestaltung wird allerdings die Veränderung der Federkraft durch die spezielle Umlenkkurve 42 neutralisiert, so daß der Gewichtsausgleich in jeder Position optimal ist und der Gelenkarm in jeder Position stabil stehenbleibt.

Die Erfindung ist nicht auf die dargestellten und beschriebenen Ausführungsbeispiele beschränkt, sondern umfaßt auch alle im Sinne der Ansprüche gleichwirkenden Ausführungsformen. So können die Federelemente 20, 22 in beliebiger Kombination von Druck- und/oder Zugfedern gebildet sein. Beispielsweise könnten alternativ zu den dargestellten Ausführungsformen beide Federelemente als Druckfedern oder beide als Zugfedern ausgeführt sein. Ferner kann zwischen dem ersten und zweiten Gelenk zur Parallelführung anstatt des unteren Zugteils auch eine Schubstange vorgesehen sein, die dann nur jeweils auf der anderen (unteren) Seite der Gelenke angelenkt sein muß.

## Patentansprüche

1. Gelenkarm zur positionsvariablen Halterung insbesondere von Bürogeräten, wie Bildschirmen, Telefonen und dergleichen, bestehend aus einem ortsfest zu befestigenden Sockelteil (2), einem mit dem Sockelteil (2) über ein erstes Gelenk (8) schwenkbar verbundenen unteren Armteil (4) sowie einem mit dem unteren Armteil (4) über ein zweites Gelenk (10) schwenkbar verbundenen oberen Armteil (6), wobei das obere Armteil (6) mit dem Sockelteil (2) über ein Zugelement (16) verbunden ist und Federmittel (18) in Form von zwei Federelementen (20, 22) derart vorgesehen sind, daß eine die Armteile (4, 6) abstützende Tragkraft (F) erzeugt wird, **dadurch gekennzeichnet, daß** das Zugelement (16) exzentrisch zur jeweiligen Gelenkachse (12, 14) über die beiden Gelenke (8, 10) geführt und an dem Sockelteil (2) befestigt ist, wobei das erste Federelement (20) im Bereich des unteren Armteils (4) zwischen diesem und dem durchgehend zwischen dem Sokkelteil (2) und dem zweiten Gelenk (10) verlaufenden Zugelement (16) - und damit in Parallelschaltung zu dem Zugelement (16) - und das zweite Federlement (22) im Bereich des oberen Armteils (6) zwischen diesem und dem Zugelement (16) - in Reihenschaltung mit dem Zugelement (16) - angeordnet sind.

2. Gelenkarm nach Anspruch 1,
**dadurch gekennzeichnet, daß** das Zugelement (16) zweiteilig aus einem unteren Zugteil (24) und einem oberen Zugteil (26) gebildet ist, wobei die beiden Zugteile (24, 26) im Bereich des zweiten Gelenks (10) über ein frei um die Gelenkachse (14) verdrehbares, vorzugsweise scheibenförmiges Umlenkelement (28) verbunden sind.

3. Gelenkarm nach Anspruch 2,
**dadurch gekennzeichnet, daß** das untere Zugteil (24) von einem flexiblen Zugseil (30) gebildet ist, welches einseitig am Sockelteil (2) exzentrisch zur Gelenkachse (12) des ersten Gelenks (8) sowie anderseitig am Umlenkelement (28) exzentrisch zur Gelenkachse (14) des zweiten Gelenks (10) befestigt ist.

4. Gelenkarm nach Anspruch 3,
**dadurch gekennzeichnet, daß** das Zugseil (30) im Bereich des ersten Gelenks (8) über eine Umlenkkurve (36) des Sockelteils (2) und/oder im Bereich des zweiten Gelenks (10) über eine Umlenkkurve (38) des Umlenkelementes (28) geführt ist.

5. Gelenkarm nach Anspruch 2,
**dadurch gekennzeichnet, daß** das untere Zugteil (24) von einer starren Zugstange (56) gebildet ist, die einseitig gelenkig und exzentrisch zur Gelenkachse (12) des ersten Gelenks (8) am Sockelteil (2) sowie anderseitig gelenkig und exzentrisch zur Gelenkachse (14) des zweiten Gelenks (10) am Umlenkelement (28) befestigt ist.

6. Gelenkarm nach einem der Ansprüche 2 bis 5,
**dadurch gekennzeichnet, daß** das obere Zugteil (26) von einem flexiblen Zugseil (40) gebildet ist, welches einseitig am Umlenkelement (28) exzentrisch zur Gelenkachse (14) des zweiten Gelenks (10) sowie anderseitig mittelbar über das zweite Federelement (22) am oberen Armteil (6) befestigt ist.

7. Gelenkarm nach Anspruch 6,
**dadurch gekennzeichnet, daß** das Zugseil (40) im Bereich des zweiten Gelenks (10) über eine Umlenkkurve (42) des Umlenkelementes (28) geführt ist.

8. Gelenkarm nach Anspruch 4 und 7,
**dadurch gekennzeichnet, daß** die beiden den Zugseilen (30,40) zugeordneten Umlenkkurven (38,42) in Richtung der Gelenkachse (14) versetzt angeordnet sind.

9. Gelenkarm nach Anspruch 8,
**dadurch gekennzeichnet, daß** die beiden Umlenkkurven (38,42) gleich oder - insbesondere bezüglich ihrer Krümmungsradien - unterschiedlich ausgebildet sind.

10. Gelenkarm nach einem der Ansprüche 4 bis 9,
**dadurch gekennzeichnet, daß** die dem unteren Zugseil (30) zugeordnete Umlenkkurve (38) und/oder die dem oberen Zugseil (40) zugeordnete Umlenkkurve (42) einen über den Seilumlenkweg hinweg konstanten oder sich ändernden Krümmungsradius aufweisen/aufweist.

11. Gelenkarm nach einem oder Ansprüche 6 bis 10,
**dadurch gekennzeichnet, daß** die Umlenkkurve (36) des Sockelteils (2) einen über den Seilumlenkweg hinweg konstanten oder sich ändernden Krümmungsradius aufweist.

12. Gelenkarm nach einem der Ansprüche 3 bis 11,
**dadurch gekennzeichnet , daß** das jeweilige Zugseil (30;40) endseitig jeweils ein Verbinderstück (44) aufweist, welches formschlüssig in einer Aufnahmevertiefung (46) des jeweiligen, mit diesem Seilende verbundenen Teils (2;28) sitzt.

13. Gelenkarm nach einem der Ansprüche 1 bis 12,
**dadurch gekennzeichnet, daß** die Federelemente (20,22) jeweils als Druck- oder Zugfeder ausgebildet sind.

14. Gelenkarm nach einem der Ansprüche 1 bis 13,
**dadurch gekennzeichnet, daß** das Zugelement (16) mit dem Sockelteil (2) mittelbar über eine Tragkraft-Justiereinrichtung (50) verbunden ist.

15. Gelenkarm nach einem der Ansprüche 1 bis 14,
**dadurch gekennzeichnet, daß** die Armteile (4,6) jeweils als rohrartige Hohlkörper mit vorzugsweise etwa rechteckiger Querschnittskontur ausgebildet sind, wobei das Zugelement (16) und die Federmittel (18) innerhalb der Armteile (4,6) angeordnet sind.

16. Gelenkarm nach einem der Ansprüche 1 bis 15,
**dadurch gekennzeichnet, daß** die Armteile (4,6) in ihrem Verbindungsbereich ein Gelenkgehäuse (52) bilden, wobei jedes Armteil (4,6) eine Gehäuse-Halbschale (54a,b) aufweist.

## Claims

1. Articulation arm for the variably positioned mounting in particular of office equipment, such as screens, telephones and the like, comprising a base part (2), which is to be fastened in a stationary manner, a bottom arm part (4), which is connected pivotably to the base part (2) via a first articulation (8), and a top arm part (6), which is connected pivotably to the bottom arm part (4) via a second articulation (10), it being the case that the top arm part (6) is connected to the base part (2) via a pull element (16), and spring means (18) in the form of two spring elements (20, 22) are provided so as to produce a carrying force (F) which supports the arm parts (4, 6), **characterized in that** the pull element (16) is guided over the two articulations (8, 10) eccentrically to the respective articulation axis (12, 14) and fastened on the base part (2), it being the case that the first spring element (20) is arranged in the region of the bottom arm part (4), between the latter and the pull element (16), which runs continuously between the base part (2) and the second articulation (10) - the first spring element thus being arranged in parallel with the pull element (16) - and the second spring element (22) is arranged in the region of the top arm part (6), between the latter and the pull element (16) - the second spring element thus being arranged in series with the pull element (16).

2. Articulation arm according to Claim 1, **characterized in that** the pull element (16) is formed in two parts from a bottom pull part (24) and a top pull part (26), it being the case that the two pull parts (24, 26) are connected in the region of the second articulation (10) via a preferably disc-like deflecting element (28) which can be rotated freely about the articulation axis (14).

3. Articulation arm according to Claim 2, **characterized in that** the bottom pull part (24) is formed by a flexible pull cable (30) which is fastened, on one side, on the base part (2) eccentrically to the articulation axis (12) of the first articulation (8) and, on the other side, on the deflecting element (28) eccentrically to the articulation axis (14) of the second articulation (10).

4. Articulation arm according to Claim 3, **characterized in that** the pull cable (30) is guided, in the region of the first articulation (8), over a deflecting curve (36) of the base part (2) and/or, in the region of the second articulation (10), over a deflecting curve (38) of the deflecting element (28).

5. Articulation arm according to Claim 2, **characterized in that** the bottom pull part (24) is formed by a rigid pull rod (56) which is fastened, on one side, on the base part (2) in an articulated manner and eccentrically to the articulation axis (12) of the first articulation (8) and, on the other side, on the deflecting element (28) in an articulated manner and eccentrically to the articulation axis (14) of the second articulation (10).

6. Articulation arm according to one of Claims 2 to 5, **characterized in that** the top pull part (26) is formed by a flexible pull cable (40) which is fastened, on one side, on the deflecting element (28) eccentrically to the articulation axis (14) of the second articulation (10) and, on the other side, on the top arm part (6) indirectly via the second spring element (22).

7. Articulation arm according to Claim 6, **characterized in that** the pull cable (40) is guided, in the region of the second articulation (10), over a deflecting curve (42) of the deflecting element (28).

8. Articulation arm according to Claims 4 and 7, **characterized in that** the two deflecting curves (38, 42) assigned to the pull cables (30, 40) are arranged in an offset manner in the direction of the articulation axis (14).

9. Articulation arm according to Claim 8, **characterized in that** the two deflecting curves (38, 42) are designed in the same way or - in particular in terms of their radii of curvature - differently.

10. Articulation arm according to one of Claims 4 to 9, **characterized in that** the deflecting curve (38), which is assigned to the bottom pull cable (30), and/or the deflecting curve (42), which is assigned to the top pull cable (40), have/has a constant or changing radius of curvature over the cable-deflecting path.

11. Articulation arm according to one of Claims 6 to 10, **characterized in that** the deflecting curve (36) of the base part (2) has a constant or changing radius of curvature over the cable-deflecting path.

12. Articulation arm according to one of Claims 3 to 11, **characterized in that** the respective pull cable (30; 40) has, on the end side in each case, a connector piece (44) which is seated in a form-fitting manner in a receiving depression (46) of the respective part (2; 28) connected to said cable end.

13. Articulation arm according to one of Claims 1 to 12, **characterized in that** the spring elements (20, 22) are designed as compression or tension springs in each case.

14. Articulation arm according to one of Claims 1 to 13, **characterized in that** the pull element (16) is connected to the base part (2) indirectly via a carrying-force adjustment device (50).

15. Articulation arm according to one of Claims 1 to 14, **characterized in that** the arm parts (4, 6) are each designed as tubular hollow bodies with preferably an approximately rectangular cross-sectional contour, the pull element (16) and spring means (18) being arranged within the arm parts (4, 6).

16. Articulation arm according to one of Claims 1 to 15, **characterized in that** the arm parts (4, 6) form an articulation housing (52) in their connecting region, each arm part (4, 6) having a housing half-shell (54a,b).

## Revendications

1. Bras articulé pour le support dans des positions variables en particulier d'appareils de bureau, tels qu'écrans, téléphones et analogues, comprenant un élément de socle (2) à fixer de manière stationnaire, une portion de bras inférieure (4) reliée de manière pivotante à l'élément de socle (2), grâce à une première articulation (8), ainsi qu'une portion de bras supérieure (6) reliée de manière pivotante à la portion de bras inférieure (4), grâce à une deuxième articulation (10), la portion de bras supérieure (6) étant reliée à l'élément de socle (2) par un moyen de traction (16), des moyens élastiques (18) en forme de deux éléments élastiques (20, 22) étant prévus, de manière à engendrer une force de support (F) soutenant les portions de bras (4, 6),
**caractérisé en ce que** le moyen de traction (16) passe de manière excentrique par rapport à l'axe d'articulation respective (12, 14) sur les deux articulations (8, 10) et est fixé sur l'élément de socle (2), le premier élément élastique (20) étant agencé dans la région de la portion de bras inférieure (4) entre celle-ci et le moyen de traction (16) s'étendant en continu entre l'élément de socle (2) et la deuxième articulation (10) ― et ainsi en parallèle par rapport audit moyen de traction (16) - et le deuxième élément élastique (22) étant disposé dans la région de la portion de bras supérieure (6) entre celle-ci et le moyen de traction (16) ― en série avec ledit moyen de traction (16).

2. Bras articulé selon la revendication 1, **caractérisé en ce que** le moyen de traction (16) est prévu en deux parties, à savoir un élément de traction inférieur (24) et un élément de traction supérieur (26), les deux éléments de traction (24, 26) étant reliés entre eux, dans la région de la deuxième articulation (10), par un moyen de déviation (28), de préférence en forme de disque, librement mobile autour de l'axe d'articulation (14).

3. Bras articulé selon la revendication 2, **caractérisé en ce que** l'élément de traction inférieur (24) est constitué par un câble de traction flexible (30) qui est fixé d'un côté à l'élément de socle (2) de manière excentrique par rapport à l'axe d'articulation (12) de la première articulation (8), et de l'autre côté, sur le moyen de déviation (28) de manière excentrique par rapport à l'axe d'articulation (14) de la deuxième articulation (10).

4. Bras articulé selon la revendication 3, **caractérisé en ce que** le câble de traction (30) passe, dans la région de la première articulation (8), par une courbe de déviation (36) de l'élément de socle (2) et/ou, dans la région de la deuxième articulation (10), par une courbe de déviation (38) du moyen de déviation (28).

5. Bras articulé selon la revendication 2, **caractérisé en ce que** l'élément de traction inférieur (24) est formé par une barre de traction rigide (56) qui est fixée d'un côté de manière articulée et excentrique par rapport à l'axe d'articulation (12) de la première articulation (8), sur l'élément de socle (2), et de l'autre côté, de manière articulée et excentrique par rapport à l'axe d'articulation (14) de la deuxième articulation (10), sur le moyen de déviation (28).

6. Bras articulé selon l'une des revendications 2 à 5, **caractérisé en ce que** l'élément de traction supérieur (26) est formé par un câble de traction flexible (40) qui est fixé d'un côté sur le moyen de déviation (28), de manière excentrique par rapport à l'axe d'articulation (14) de la deuxième articulation (10), et de l'autre côté, sur la portion de bras supérieure (6), au moyen du deuxième élément élastique (22).

7. Bras articulé selon la revendication 6, **caractérisé en ce que** le câble de traction (40) passe, dans la région de la deuxième articulation (10), par une courbe de déviation (42) du moyen de déviation (28).

8. Bras articulé selon la revendication 4 et 7, **caractérisé en ce que** les deux courbes de déviation (38, 42) associées aux câbles de traction (30, 40) sont décalées dans la direction de l'axe d'articulation (14).

9. Bras articulé selon la revendication 8, **caractérisé en ce que** les deux courbes de déviation (38, 42) sont de forme identique ou différente ― en particulier en ce qui concerne leurs rayons de courbure.

10. Bras articulé selon l'une des revendications 4 à 9, **caractérisé en ce que** la courbe de déviation (38) associée au câble de traction inférieur (30) et/ou la courbe de déviation (42) associée au câble de traction supérieur (40) présente(nt) un rayon de courbure constant ou variant le long du trajet de déviation du câble.

11. Bras articulé selon l'une des revendications 6 à 10, **caractérisé en ce que** la courbe de déviation (36) de l'élément de socle (2) présente un rayon de courbure constant ou variant le long du trajet de déviation du câble.

12. Bras articulé selon l'une des revendications 3 à 11, **caractérisé en ce que** le câble de traction respectif (30, 40) comporte à son extrémité un élément de raccord (44) qui est emboîté de par sa forme dans une cavité d'accueil (46) de l'élément (2, 28) relié respectivement à cette extrémité de câble.

13. Bras articulé selon l'une des revendications 1 à 12, **caractérisé en ce que** les éléments élastiques (20, 22) sont respectivement agencés en ressort de pression ou de traction.

14. Bras articulé selon l'une des revendications 1 à 13, **caractérisé en ce que** l'élément de traction (16) est relié à l'élément de socle (2) au moyen d'un dispositif d'ajustement de la force de support (50).

15. Bras articulé selon l'une des revendications 1 à 14, **caractérisé en ce que** les portions de bras (4, 6) ont respectivement la forme de corps creux tubulaires, de préférence de coupe transversale sensiblement rectangulaire, l'élément de traction (16) et les éléments élastiques (18) étant agencés à l'intérieur des portions de bras (4, 6).

16. Bras articulé selon l'une des revendications 1 à 15, **caractérisé en ce que** les portions de bras (4, 6) forment, dans leur région de liaison, un boîtier d'articulation (52), chaque portion de bras (4, 6) comportant une demi-coquille de boîtier (54a, b).
